# FASCICULE DE BREVET EUROPEEN

(11) **EP 0 393 123 B1**
(45) Date de publication et mention de la délivrance du brevet: **26.01.1994**
(21) Numéro de dépôt: 89900613.4
(22) Date de dépôt: 14.12.1988
(51) Int. Cl.: B60C 23/04, G01L 19/08

(54) **ELEMENTS NECESSAIRES A L'EXCITATION ET A L'ECOUTE DES MODULES DE ROUE DANS UN SYSTEME DE SURVEILLANCE DES ROUES D'UN VEHICULE**
ELEMENTE ZUR ERREGUNG UND ABTASTUNG VON AM REIFEN BEFINDLICHEN MODULEN IN EINEM FAHRZEUGREIFENÜBERWACHUNGSSYSTEM
ELEMENTS REQUIRED FOR EXCITING AND MONITORING WHEEL MODULES IN A MONITORING SYSTEM FOR VEHICLE WHEELS

(30) Priorité: 16.12.1987 FR 8717696
(43) Date de publication de la demande: 24.10.1990
(73) Titulaire: COMPAGNIE GENERALE DES ETABLISSEMENTS MICHELIN-MICHELIN & CIE, F-63000 Clermont-Ferrand (FR)
(72) Inventeur: DOSJOUB, André, F-63400 Chamalières (FR)
(74) Mandataire: Bauvir, Jacques
(86) Numéro de dépôt international: FR8800612
(87) Numéro de publication internationale: WO8905737

(56) Documents cités:
- EP-A- 0 045 401
- WO-A-82/02249
- WO-A-87/00127
- WO-A-87/00129
- WO-A-87/04123
- FR-A- 2 577 060

## Description

La présente invention se rapporte à la surveillance des roues d'un véhicule, notamment des pneumatiques, comme décrit dans le document EP-A-0 045 401. En particulier, elle concerne les éléments implantés sur le véhicule, c'est-à-dire dans l'espace fixe ou plus précisément dans l'espace non mobile en rotation.

Elle concerne ceux des sytèmes de surveillance comprenant des modules implantés sur chaque roue à surveiller, des liaisons entre roue et espace fixe, par exemple par antennes couplées inductive- ment et, sur véhicule, des éléments assurant l'exploitation globale du système pour fournir un signal exploitable par le conducteur, ou par tout système d' alarme, centralisé ou non.

La demande de brevet W087/00127 propose un codage permettant de transmettre la valeur de la pression et de la température d'un pneumatique depuis la roue portant ledit pneumatique vers le véhicule (espace fixe). Le codage décrit se prête à la réalisation d'une transmission par couplage inductif. La demande de brevet W087/00129 décrit une façon d'accumuler et d'utiliser de l'énergie électrique transmise au moyen d'un courant alternatif transmis par couplage inductif. Un dispositif ainsi conçu fonctionne selon le cycle suivant : excitation du module implanté sur la roue par envoi, depuis le véhicule, d'une excitation, dans laquelle ledit module de roue puisera l'énergie nécessaire à son fonctionnement, puis écoute, sur le véhicule, du signal reçu en réponse à l'excitation. Ce signal reçu comporte, par codage, les valeurs des paramètres mesurés sur la roue. Selon la conception proposée par la publication W087/00129, ledit signal est produit par le module de roue dès que cesse l'excitation.

La présente invention a pour but de proposer des éléments d'excitation et d'écoute des modules de roue qui permettent d'atteindre une vitesse de scrutation aussi élevée que possible.

Un autre objectif de l'invention est de proposer un dispositif aussi insensible que possible à l'environnement électromagnétique et radio fréquence, et qui ne provoque pas de parasites susceptibles de gêner les équipements électriques embarqués sur le véhicule.

Un autre objectif de l'invention est de proposer un dispositif apte à écouter le module de roue aussi vite que possible après la fin de l'excitation.

Réaliser un dispositif d'excitation dont les performances restent constantes quelle que soit la tension d'alimentation de la batterie du véhicule est encore un autre objectif de l'invention.

Le dispositif d'excitation et d'écoute selon l'invention, utilisable pour la surveillance des roues d'un véhicule, ledit dispositif comportant pour chaque roue un module capable d'accumuler de l'énergie électrique grâce à la transmission d'un courant par couplage inductif depuis le véhicule vers ladite roue, capable de coder les valeurs des paramètres observés sur une roue, et capable de transmettre par couplage inductif le signal ainsi codé, une antenne fixée coaxialement à la roue étant raccordée audit module, ledit dispositif étant prévu pour se raccorder à une antenne d'inspection par roue, ladite antenne d'inspection étant fixée à une partie du véhicule non mobile en rotation de telle sorte que le couplage inductif avec l'antenne de roue soit sensiblement constant, est caractérisé en ce qu'il comporte
- par roue, un ensemble assurant la production du courant d'excitation et la mise en forme du signal reçu en réponse à l'excitation,
- des moyens de pilotage du cycle "excitation de modules de roue et écoute de ceux-ci" assurant l'écoute successive de chaque roue et, simultanément à ladite écoute d'une roue, l'excitation d'au moins un autre module de roue qui sera écouté dans la phase suivante du cycle,
- des moyens assurant le traitement du signal reçu pour en extraire lesdites valeurs.

Les figures suivantes illustrent l'invention et permettent de bien la comprendre :
La figure 1 est un schéma général d'un dispositif selon l'invention.
La figure 2 représente plus en détails un ensemble inclus dans un dispositif selon l'invention.
La figure 3 est un chronogramme d'un courant relevé dans ledit ensemble.
Les figures 4a, 4b, 4c représentent la commande de l'excitation.

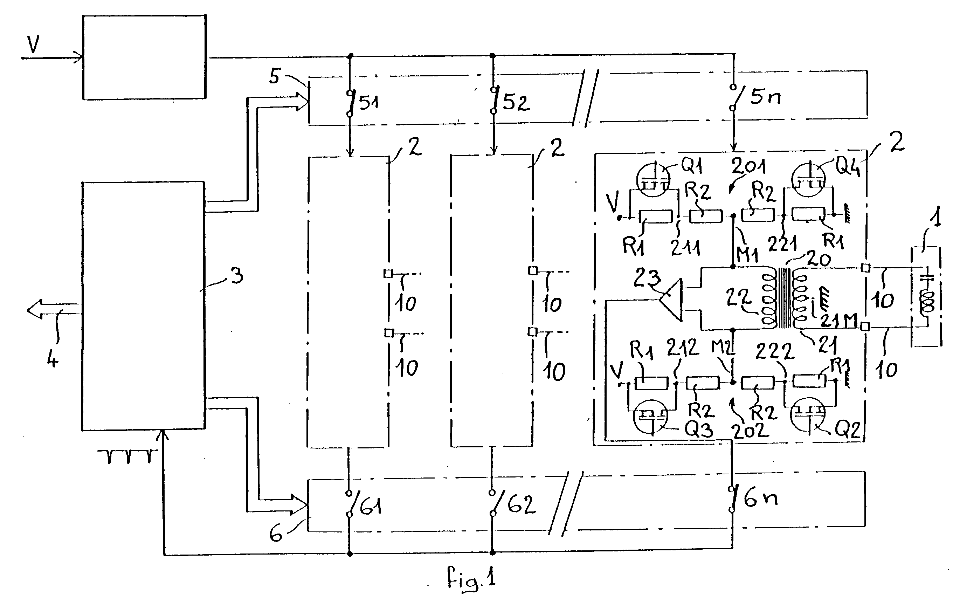

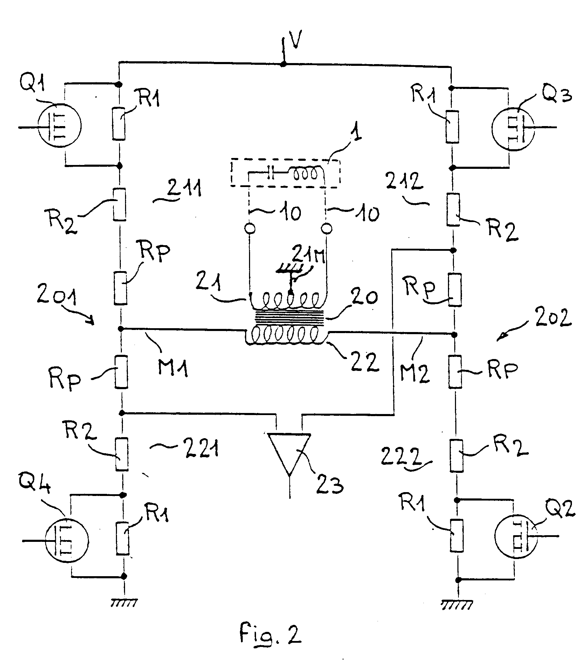

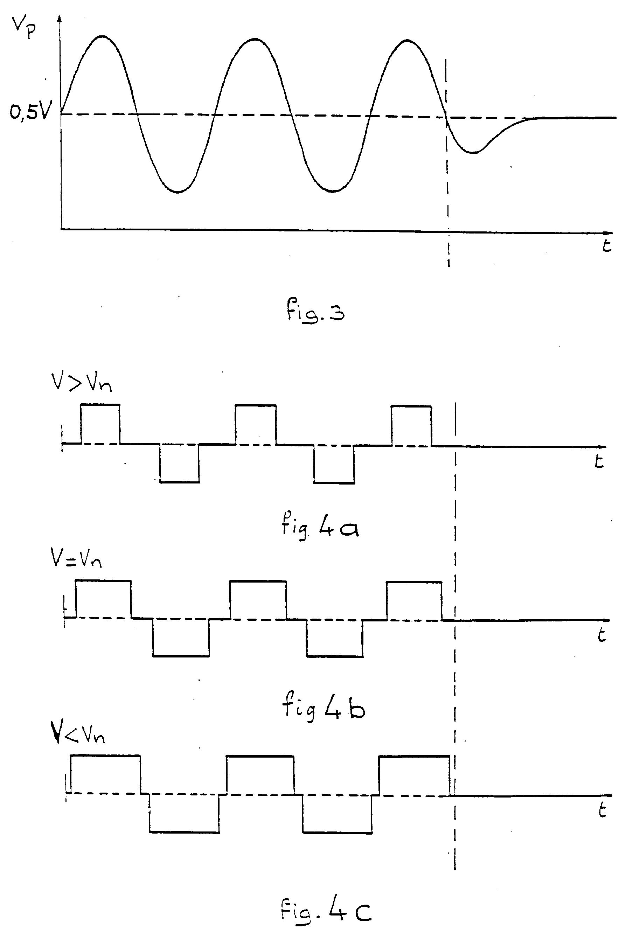

A la figure 1, on voit une antenne d'inspection 1, destinée à être couplée à une antenne de roue non représentée (couplage électromagnétique). Le dispositif comporte un ensemble 2 par roue du véhicule. Chaque ensemble 2 assure la production du courant d'excitation convenable, sel on la conception du module de roue associé. Dans le cas d'un module de roue conçu selon l'enseignement du document W087/00129, ce courant d'excitation est par exemple alternatif. Chaque ensemble assure également la réception et la mise en forme du signal envoyé par la roue en réponse à l'excitation. Ce signal porte les valeurs codées des paramètres mesurés, par exemple la pression et la température des pneumatiques montés sur les roues. Le signal de sortie de chaque ensemble 2 est appliqué à un microprocesseur 3 qui en assure le traitement pour extraire les valeurs décodées des paramètres observés sur la roue. Le décodage est bien sûr conditionné par le type de codage effectué par le module de roue. Ces valeurs peuvent être envoyées vers un afficheur, ou vers un autre microprocesseur pour traitement supplémentaire, ou bien encore peuvent faire l'objet d'autres traitements sur le même microprocesseur. La sortie 4 englobe en général toutes ces possibilités, qui ne sont pas l'objet de cette invention.

Le microprocesseur 3 pilote également, via les voies de commande 5 et 6, l'état de fonctionnement des ensembles 2. Par la voie 5, le mode "excitation" des ensembles 2 est lancé, ou au contraire arrêté. Cela est symbolisé sur la figure 1 par les interrupteurs 51, 52..., 5n, qui, lorsqu'ils sont fermés, entraînent l'envoi d'un courant d'excitation par l'ensemble 2 correspondant, et qui lorsqu'il sont ouverts (comme l'interrupteur 5n sur la voie 5), laissent l'excitation au repos. C'est à ce moment que l'ensemble 2 correspondant est à même d'écouter le signal reçu de la roue. Par la voie de commande 6, on envoie donc le signal au microprocesseur 3, et ceci pendant une durée suffisante pour pouvoir en effectuer le décodage. Le pilotage global par le microprocesseur 3 assure donc la sélection pour l'écoute d'une seule roue à la fois ; il assure que, pendant l'écoute, il n'y a pas de courant d'excitation sur l'ensemble 2 correspondant et il assure que l'écoute est sélectionnée juste après une phase d'excitation, afin que le module roue dispose de l'énergie nécessaire à son fonctionnement. A titre d'exemple, on assure l'excitation simultanée de toutes les roues sauf une (la ₅n^{ième} comme schématisé sur la figure 1) qui est celle qui est écoutée par le microprocesseur pour effectuer le décodage, et on sélectionne successivement toutes les roues pour l'écoute. De cette façon, l'excitation nécessaire des roues est effectuée en temps masqué par rapport à la phase de transmission des mesures.

A la figure 1, on voit que chaque ensemble 2 comporte un transformateur d'isolement 20 dont le secondaire 21 est raccordé à l'antenne d'inspection 1 et comporte un point milieu 21 M raccordé à la masse du véhicule. La bobine d'inspection n'est en conséquence raccordée à la masse du véhicule que par ce point milieu 21 M. De la sorte, les lignes 10 de raccordement entre les circuits implantés sur le véhicule et les différentes antennes d'inspection 1 peuvent être constituées tout simplement par un câble bifilaire ordinaire. Le recours à un câble blindé est superflu, sans préjudice de l'immunité du dispositif aux parasites. Les lignes 10 cheminent inévitablement au travers de tout le véhicule pour rejoindre les roues. Elles sont donc longues et peuvent cotoyer d'autres appareillages électriques. Le point milieu 21 M rend symétriques par rapport à la masse les courants ou signaux passant par la maille du circuit comportant ce point milieu 21 M. Par ce montage, le champ électromagnétique résultant issu de deux sources proches l'une de l'autre (les deux fils nécessaires à chaque ligne 10) est nul. De même, la rejection du mode commun est excellente à l'intérieur du secondaire 21. Il en résulte une excellente compatibilité électromagnétique et un niveau d'interférences aux fréquences radio très réduit.

Chaque ensemble 2 comporte deux branches 201, 202 connectées en parallèle entre la tension d'alimentation V et la masse. Chaque branche 201, 202 est constituée de deux groupes résistifs -211, 221, 212, 222- connectés en série. Chaque groupe a une impédance identique et comprend au moins une résistance d'amortissement R₁ en parallèle de laquelle est raccordé un moyen formant interrupteur, par exemple un interrupteur électronique comme un transistor Q₁, Q₂, Qₐ, Q₄. Les bornes du primaire 22 du transformateur 20 sont raccordés aux points médians Mi et M₂ définis comme étant la borne commune de chacun des deux groupes résistifs 21X, 22X à l'intérieur de chaque branche 20X.

Le courant d'excitation est établi par le cycle suivant : fermeture simultanée de deux interrupteurs : celui du groupe raccordé à la tension d'alimentation d'une branche -groupe 211 de la branche 201- et de celui du groupe raccordé à la masse de l'autre branche -groupe 222 de la branche 202-, soit fermeture des moyens formant interrupteur 0₁ et Q₂. Puis inversément par fermeture des interrupteurs Q₃ et Q₄. Les figures 4a, 4b, 4c représentent le signal de commande desdits interrupteurs : les impulsions positives commandent la fermeture des interrupteurs 0₁ et Q₂ par exemple et les impulsions de signe contraire commandent les autres interrupteurs. De manière avantageuse, la largeur desdites impulsions décroît lorsque la tension V de la batterie du véhicule croît. Les figures 4b et 4c illustrent la croissance de la durée des impulsions lorsque la tension de la batterie décroît par rapport à la situation représentée par la figure 4a. De la sorte, l'énergie d'excitation peut rester sensiblement constante quelle que soit la tension de cette batterie.

De préférence, chaque groupe résistif comporte une résistance R₂ de limitation du courant, en série avec la résistance d'amortissement R₁.

Les impédances de tous les groupes étant identiques, il apparaît à chaque borne du primaire, et par rapport à la masse, une tension Vp sensiblement sinusoïdal (selon la valeur des résistances et inductances), avec une composante continue. La tension représentée à la figure 3 est celle apparaissant à la borne M₁ et les échelles de temps des figures 3, 4a, 4b, 4c correspondent. La valeur moyenne de ladite tension Vp est égale à 0,5 multiplié par V, si V est la tension d'alimentation de l'ensemble 2. La tension apparaissant à la borne M₂ et égale mais en opposition de phase par rapport à celle apparaissant à la borne M₁. Entre les bornes du primaire 22, il apparaît donc une tension alternative sensiblement sinusoïdale.

Lorsque tous les interrupteurs sont ouverts, l'excitation cesse et le module de roue envoie immédiatement un signal codé, comme proposé par exemple par la demande de brevet WO 087/00129. D'autre part, la tension à laquelle est portée chaque borne de la bobine constituant le primaire 22 du transformateur 20 vaut 0,5 multiplié par V, soit exactement la valeur moyenne prévalant pendant l'excitation. Il en résulte un amortissement du courant d'excitation très rapide, comme schématisé par la figure 3. L'avantage de cette disposition tient dans le fait que l'ensemble 20 est ainsi extrêmement rapidement apte à écouter le signal reçu de la roue sans être perturbé par les séquelles de la phase d'excitation.

La mise en forme du signal reçu est effectuée par la comparateur 23 dont les entrées sont branchées à la bobine constituant le primaire 22. Afin que le comparateur 23 filtre automatiquement tous les signaux parasites, on le raccorde de préférence à ladite bobine via des résistances Rp de polarisation, comme visible à la figure 2. Au repos, il en résulte une différence de potentiel appliquée aux bornes du comparateur, de sorte que celui-ci ne bascule que lorsque le signal reçu aux bornes de ladite bobine est supérieur à cette différence de potentiel. Pour conserver la symétrie du schéma, on introduit donc une telle résistance de polarisation Rp dans chacun des quatre groupes 211, 221, 212, 222. Il va de soi que au moins celles de ces résistances Rp servant à la polarisation des entrées du comparateur 23 doivent être connectées aux bornes médiannes Mᵢ et M₂.

Le dispositif ainsi conçu permet une interrogation et une écoute des modules de roue d'un système de surveillance des pneumatiques qui soit très fiable, rapide, et compatible avec l'équipement électrique d'un véhicule.

## Revendications

1. Dispositif d'excitation et d'écoute pour la surveillance des roues d'un véhicule, ledit dispositif étant fixé à une partie du véhicule non mobile en rotation, et comportant, pour chaque roue, un module capable d'accumuler de l'énergie électrique grâce à la transmission d'un courant par couplage inductif depuis le véhicule vers ladite roue, capable de coder les valeurs des paramètres observés sur une roue, et capable de transmettre par couplage inductif le signal ainsi codé, une antenne fixée coaxialement à la roue étant raccordée audit module, ledit dispositif étant prévu pour se raccorder à une antenne d'inspection (1) par roue, ladite antenne d'inspection (1) étant fixée à une partie du véhicule non mobile en rotation, de telle sorte que le couplage inductif avec l'antenne de roue soit sensiblement constant, comportant,
- par roue, un ensemble (2) assurant la production du courant d'excitation et la mise en forme du signal reçu en réponse à l'excitation,
- des moyens de pilotage du cycle "excitation de modules de roue et écoute de ceux-ci" assurant l'écoute successive de chaque roue et,
- des moyens assurant le traitement du signal reçu pour en extraire lesdites valeurs,
caractérise en ce que les moyens de pilotage assurent, simultanément à ladite écoute d'une roue, l'excitation d'au moins un autre module de roue qui sera écouté dans la phase suivante du cycle.

2. Dispositif d'excitation et d'écoute pour la surveillance des roues d'un véhicule, ledit dispositif comportant, pour chaque roue, un module capable d'accumuler de l'énergie électrique grâce à la transmission d'un courant par couplage inductif depuis le véhicule vers ladite roue, capable de coder les valeurs des paramètres observés sur une roue, et capable de transmettre par couplage inductif le signal ainsi codé, une antenne fixée coaxialement à la roue étant raccordée audit module, ledit dispositif étant prévu pour se raccorder à une antenne d inspection (1) par roue, ladite antenne d'inspection (1) étant fixée à une partie du véhicule non mobile en rotation, de telle sorte que le couplage inductif avec l'antenne de roue soit sensiblement constant, comportant
- par roue, un ensemble (2) assurant la production du courant d'excitation et la mise en forme du signal reçu en réponse à l'excitation,
- des moyens de pilotage du cycle "excitation de modules de roue et écoute de ceux-ci" assurant l'écoute successive de chaque roue,
- des moyens assurant le traitement du signal reçu pour en extraire lesdites valeurs,
caractérisé en ce que ledit ensemble (2) comporte un transformateur (20) d'isolement dont le secondaire (21) est raccordé à une antenne d'inspection (1), et comporte un point milieu (21 M) raccordé à la masse du véhicule.

3. Dispositif d'excitation et d'écoute pour la surveillance des roues d'un véhicule, ledit dispositif comportant, pour chaque roue, un module capable d'accumuler de l'énergie électrique grâce à la transmission d'un courant par couplage inductif depuis le véhicule vers ladite roue, capable de coder les valeurs des paramètres observés sur une roue, et capable de transmettre par couplage inductif le signal ainsi codé, une antenne fixée coaxialement à la roue étant raccordée audit module, ledit dispositif étant prévu pour se raccorder à une antenne d'inspection (1) par roue, ladite antenne d'inspection (1) étant fixée à une partie du véhicule non mobile en rotation, de telle sorte que le couplage inductif avec l'antenne de roue soit sensiblement constant, comportant
- par roue, un ensemble (2) assurant la production du courant d'excitation et la mise en forme du signal reçu en réponse à l'excitation,
- des moyens de pilotage du cycle "excitation de modules de roue et écoute de ceux-ci" assurant l'écoute successive de chaque roue,
- des moyens assurant le traitement du signal reçu pour en extraire lesdites valeurs,
caractérisé en ce que ledit ensemble comporte un transformateur (20) d'isolement dont le secondaire est raccordé à l'antenne d'inspection (1), et en ce que ledit ensemble comporte deux branches (201 et 202) chacune constituées de deux groupes résistifs (211, 221 et 212, 222) connectés en série, lesdites deux branches étant connectées en parallèle entre la tension d'alimentation V et la masse, chaque groupe ayant une impédance identique, chaque groupe comprenant au moins une résistance d'amortissement R₁ en parallèle de laquelle est raccordé un moyen formant interrupteur, les bornes de ladite antenne d'inspection (1) étant raccordées respectivement entre les deux groupes de chaque branche à une borne médiane, la production du courant d'excitation étant assurée par le cycle suivant : fermeture simultanée desdits interrupteurs du groupe raccordé à la tension d'alimentation d'une branche et du groupe raccordé à la masse de l'autre branche, puis inversement, la mise en forme du signal reçu étant effectuée par un comparateur connecté à la bobine primaire dudit transformateur.

4. Dispositif selon la revendication 3, caractérisé en ce que ledit ensemble (2) comporte un transformateur (20) d'isolement dont le secondaire (21), raccordé à ladite antenne d'inspection (1), comporte un point milieu (21 M) raccordé à la masse du véhicule, et dont le primaire est raccordé auxdites bornes médianes de chacun des deux groupes.

5. Dispositif selon la revendication 3, caractérisé en ce que chaque groupe comporte une résistance de limitation R₂ en série avec les autres résistances du groupe.

6. Dispositif selon la revendication 3, caractérisé en ce que chaque groupe comporte une résistance de polarisation Rp en série avec les autres résistances du groupe, le comparateur de mise en forme du signal étant raccordé à la bobine primaire via ladite résistance de polarisation du groupe connecté à la tension d'alimentation d'une branche et via ladite résistance de polarisation du groupe connecté à la masse de l'autre branche.

7. Dispositif selon l'une des 3 à 6 revendications, caractérisé en ce que les moyens formant interrupteur sont commandés par un signal im- pulsionnel, la largeur desdites impulsions dépendant inversement de la tension de la batterie du véhicule, de telle façon que l'énergie d'excitation reste sensiblement constante quelle que soit la tension de la batterie du véhicule.

## Claims

1. Excitation and monitoring device for the monitoring of the wheels of a vehicle, said device comprising, for each wheel, a module able to accumulate electric energy thanks to the transmission of a current by inductive coupling from the vehicle to said wheel, able to code the values of the parameters observed on a wheel, and able to transmit, by inductive coupling, the signal thus coded, an antenna attached coaxially to the wheel being connected to said module, said device being provided to be connected to one inspection antenna (1) per wheel, said inspection antenna (1) being attached to a part of the vehicle not moving in rotation, so that the inductive coupling with the wheel antenna is approximately constant, comprising :
- per wheel, a unit (2) assuring the production of the exciting current and the shaping of the signal received in response to the excitation,
- means of controlling the cycle of "excitation of wheel modules and monitoring of the latter" assuring the successive monitoring of each wheel and,
- means assuring the processing of the received signal to extract from it said values,
characterised by the fact that the means for controlling assures simultaneously to said monitoring of a wheel, the excitation of at least one other wheel module which will be monitored in the following phase of the cycle.

2. Excitation and monitoring device for monitoring the wheels of a vehicle, said device comprising, for each wheel, a module able to accumulate electric energy thanks to the transmission of a current by inductive coupling from the vehicle to said wheel, able to code the values of the parameters observed on a wheel, and able to transmit, by inductive coupling, the signal thus coded, an antenna attached coaxially to the wheel being connected to said module, said device being provided to be connected to one inspection antenna (1) per wheel, said inspection antenna (1) being attached to a part of the vehicle not moving in rotation, so that the inductive coupling with the wheel antenna is approximately constant, comprising :
- per wheel, a unit (2) assuring the production of the exciting current and the shaping of the signal 1 received in response to the excitation,
- means of controlling the cycle of "excitation of wheel modules and monitoring of the latter" assuring the successive monitoring of each wheel,
- means assuring the processing of the received signal to extract from it said values,
characterized in that said unit (2) comprises an isolating transformer (20) whose secondary (21) is connected to an inspection antenna (1), and which comprises a middle point (21M) connected to the ground of the vehicle.

3. Excitation and monitoring device for the monitoring of the wheels of a vehicle, said device comprising, for each wheel, a module able to accumulate electric energy thanks to the transmission of a current by inductive coupling from the vehicle to said wheel, able to code the values of the parameters observed on a wheel, and able to transmit, by inductive coupling, the signal thus coded, an antenna attached coaxially to the wheel being connected to said module, said device being provided to be connected to one inspection antenna (1) per wheel, said inspection antenna (1) being attached to a part of the vehicle not moving in rotation, so that the inductive coupling with the wheel antenna is approximately constant, comprising :
- per wheel, a unit (2) assuring the production of the exciting current and the shaping of the signal received in response to the excitation,
- means of controlling the cycle of "excitation of wheel modules and monitoring of the latter" assuring the successive monitoring of each wheel,
- means assuring the processing of the received signal to extract from it said values,
characterised in that said unit comprises an isolating transformer (20) whose secondary (21) is connected to an inspection antenna (1), and said unit comprises two branches (201 and 202) each consisting of two resistive groups (211, 221 and 212, 222) connected in series, said two branches being connected in parallel between supply voltage V and the ground, each group having an identical impedance, each group comprising at least one diminishing resistance R1 in parallel to which there is connected a circuit breaker-forming means, the terminals of said inspection antenna (1) being connected respectively between the two groups of each branch to a middle terminal, the production of exciting current being assured by the following cycle : simultaneous closing of said circuit breakers of the group connected to the supply voltage of one branch and of the group connected to the ground of the other branch, then conversely, the shaping of the received signal being performed by a comparator connected to said primary winding of said transformer.

4. Device according to claim 3, characterised in that said unit (2) further comprises an isolating transformer (20) whose secondary (21), connected to said inspection antenna (1), comprises a middle point (21 M) connected to the ground of the vehicle, and whose primary is connected to said middle terminals of each of the two groups.

5. Device according to claim 3, characterised in that each group further comprises a limitation resistance R in series with the other resistances of the group.

6. Device according to claim 3, characterised in that each group further comprises a polarization resistance Rp in series with the other resistances of the group, the comparator for shaping the signal being connected to the primary winding via said polarization resistance of the group connected to the supply voltage of one branch and via said polarization resistance of the group connected to the ground of the other branch.

7. Device according to one of claims 3 to 6, characterised in that the circuit breaker-forming means are controlled by a pulse signal, the width of said pulses depending inversely on the voltage of the battery of the vehicle, so that the excitation energy remains approximately constant whatever the voltage of the battery of the vehicle may be.

## Patentansprüche

1. Vorrichtung zur Erregung und Abtastung zur Überwachung der Räder eines Fahrzeuges, die an einem nicht drehbeweglichen Teil des Fahrzeuges befestigt ist und für jedes Rad ein Modul aufweist, das durch Induktionskopplung eines Stromes vom Fahrzeug auf das Rad übertragene elektrische Energie speichern kann, das die Werte von an einem Rad beobachteten Parametern codieren kann, und das das so codierte Signal durch Induktionskopplung übertragen kann, wobei eine koaxial arm Rad befestigte Antenne mit diesem Modul verbunden ist, wobei die Vorrichtung vorgesehen ist, um mit einer Inspektionsantenne (1) pro Rad verbunden zu werden, wobei die Inspektionsantenne (1) an einem nicht drehbeweglichen Teil des Fahrzeugs befestigt ist, so daß die Induktionskopplung mit der Radantenne im wesentlichen konstant ist, mit
• pro Rad einer Anordnung (2) zur Erzeugung des Erregungsstroms und zur Formung des in Antwort auf die Erregung empfangenen Signals,
• Mittel zur Steuerung des Zyklus _{"}Erregung von Radmodulen und Abtasten derselben" zum sukzessiven Abtasten jeden Rades und
• Mittel zur Verarbeitung des empfangenen Signals und zur Gewinnung der Meßwerte,
dadurch gekennzeichnet, daß
die Steuerungsmittel gleichzeitig mit dem Abtasten eines Rades die Erregung von mindestens einem anderen Radmodul, das in der nächsten Phase des Zyklus abgetastet wird, sicherstellen.

2. Vorrichtung zur Erregung und Abtastung für die Überwachung der Räder eines Fahrzeugs, die für jedes Rad ein Modul aufweist ,das durch Induktionskopplung eines Stromes vom Fahrzeug auf das Rad übertragene elektrische Energie speichern kann, das die Werte der an einem Rad beobachteten Parameter codieren kann und das das so codierte Signal durch Induktionskopplung übertragen kann, wobei eine koaxial am Rad befestigte Antenne mit dem Modul verbunden ist, wobei die Vorrichtung vorgesehen ist, um mit einer Inspektionsantenne (1) pro Rad verbunden zu werden, wobei die Inspektionsantenne (1) an einem nicht drehbeweglichen Teil des Fahrzeugs befestigt ist, so daß die Induktionskopplung mit der Radantenne im wesentlichen konstant ist,mit:
• pro Rad einer Anordnung (2) zur Erzeugung des Erregungsstroms und zur Formung des in Antwort auf die Erregung empfangenen Signals,
• Mittel zur Steuerung des Zyklus _{"}Erregung von Radmodulen und Abtasten derselben", zum sukzessiven Abtasten jeden Rades,
• Mittel zur Verarbeitung des empfangenen Signals zur Gewinnung der Werte,
dadurch gekennzeichnet, daß
die Anordnung (2) einen Trenntransformator (20) umfaßt, dessen Sekundärseite (21) mit der Inspektionsantenne (1) verbunden ist und einen Mittenpunkt (21 M) aufweist, der mit der Fahrzeugmasse verbunden ist.

3. Vorrichtung zur Erregung und Abtastung für die Überwachung der Räder eines Fahrzeugs, wobei die Vorrichtung für jedes Rad ein Modul umfaßt, das durch Induktionskopplung eines Stromes vom Fahrzeug auf das Rad übertragene elektrische Energie speichern kann, das die Werte der an einem Rad beobachteten Parameter codieren kann, und das das so codierte Signal durch Induktionskopplung übertragen kann, wobei eine koaxial am Rad befestigte Antenne mit dem Modul verbunden ist, wobei die Vorrichtung vorgesehen ist, um mit einer Inspektionsantenne (1) pro Rad verbunden zu werden, wobei die Inspektionsantenne (1) an einem nicht drehbeweglichen Teil des Fahrzeugs befestigt ist, so daß die Induktionskopplung mit der Radantenne im wesentlichen konstant ist, mit
• pro Rad einer Anordnung (2) zur Erzeugung des Erregungsstromes und zur Formung des in Antwort auf die Erregung empfangenen Signals,
• Mittel zur Steuerung des Zyklus _{"}Erregung von Radmodulen und Abtasten derselben" zum sukzessiven Abtasten jeden Rades,
• Mittel zur Verarbeitung des empfangenen Signals zur Gewinnung der Werte,
dadurch gekennzeichnet, daß
die Anordnung einen Trenntransformator (20) umfaßt, dessen Sekundärseite mit der Inspektionsantenne (1) verbunden ist, und daß die Anordnung zwei Zweige (201 und 202) aufweist, die jeder aus zwei in Serie verbundenen Widerstandsgruppen (211, 221 und 212, 222) besteht, wobei die Zweige parallel zwischen der Versorgungsspannung V und der Masse verbunden sind, und jede Gruppe die selbe Impedanz hat, wobei jede Gruppe mindestens einen Dämpfungswiderstand R₁ umfaßt, zu dem ein als Unterbrecher dienendes Mittel parallel verbunden ist, wobei die Anschlüsse der Inspektionsantenne (1) jeweils zwischen den beiden Gruppen eines jeden Zweiges an einen Mittelanschluß angeschlossen sind, wobei die Erzeugung des Erregungsstromes durch den folgenden Zyklus sichergestellt ist: gleichzeitige Schließung der Unterbrecher der mit der Versorgungsspannung verbundenen Gruppe eines Zweiges und der mit der Masse verbundenen Gruppe des anderen Zweiges, anschließend umgekehrt, und wobei die Formung des empfangenen Signals durch einen Komparator durchgeführt wird, der mit der Primärspule des Transformators verbunden ist.

4. Vorrichtung nach Anspruch 3, dadurch gekennzeichnet, daß die Anordnung (2) einen Trenntransformator (20) aufweist, daß dessen Sekundärseite (21) mit der Inspektionsantenne (1) verbunden ist und einen Mittenpunkt (21 M) aufweist, der mit der Fahrzeugmasse verbunden ist, und daß die Primärseite des Transformators mit den Mittelanschlüssen der beiden Gruppen verbunden ist.

5. Vorrichtung nach Anspruch 3, dadurch gekennzeichnet, daß jede Gruppe einen Begrenzungswiderstand R₂ in Reihe mit den anderen Widerständen der Gruppe aufweist.

6. Vorrichtung nach Anspruch 3, dadurch gekennzeichnet, daß jede Gruppe einen Polarisierungswiderstand Rp in Reihe mit den anderen Widerständen der Gruppe umfaßt, wobei der Komparator zur Formung des Signals an die Primärspule über den Polarisierungswiderstand der mit der Versorgungsspannung verbundenen Gruppe eines Zweiges und über den Polarisierungswiderstand der mit der Masse verbundenen Gruppe des anderen Zweiges angeschlossen ist.

7. Vorrichtung nach einem der Ansprüche 3 bis 6, dadurch gekennzeichnet, daß die die Unterbrecher bildenden Mittel durch ein Impulssignal gesteuert werden, wobei die Dauer der Impulse gegensinnig von der Batteriespannung des Fahrzeugs abhängt, so daß die Erregungsenergie unabhängig von der Batteriespannung des Fahrzeugs im wesentlichen konstant bleibt.
